# EUROPÄISCHE PATENTANMELDUNG

(11) **EP 1 419 870 A1**
(43) Veröffentlichungstag der Anmeldung: **19.05.2004**
(21) Anmeldenummer: 03025328.0
(22) Anmeldetag: 04.11.2003
(51) Int. Cl.: B29C 47/00, B29C 71/00, B29D 7/01

(54) **Verfahren und Vorrichtung zum Entfernen von im Inneren eines Folienschlauches, hergestellt nach dem NMMO-Verfahren, sich ansammelnden NMMO-Wasser-Gemisches**

(30) Priorität: 12.11.2002 DE 10252387
(71) Anmelder: Kalle GmbH & Co. KG, 65203 Wiesbaden (DE)
(72) Erfinder: Hammer, Klaus-Dieter, Dr., 55120 Mainz (DE); Gord, Herbert, 55218 Ingelheim (DE); Neeff, Rainer, Dr., 65203 Wiesbaden (DE); Berghof, Klaus, 07407 Rudolstadt-Schwarza (DE); Eilers, Markus, 49835 Wietmarschen-Lohne (DE); Taeger, Eberhard, Dr., 07407 Weissbach bei Rudolstadt (DE)
(74) Vertreter: Zounek, Nikolai, Dipl.-Ing.

(57) **Zusammenfassung**

Eine Vorrichtung zum Entfernen von im Inneren eines Folienschlauches 2, der nach dem NMMO-Verfahren hergestellt ist, sich ansammelnden NMMO-Wasser-Gemisches umfasst eine Spinnkufe 4 und eine Waschkufe 7. Zwischen den beiden Kufen befindet sich ein endlos umlaufendes Förderband 1, das um zwei Rollen 5 und 6 umläuft. Das Förderband 1 ist schräg nach oben von der Spinnkufe zu der Waschkufe ausgerichtet. Der Folienschlauch 2 wird im Inneren der Spinnkufe 4 senkrecht nach unten geführt, danach umgelenkt und senkrecht aus der Spinnkufe 4 herausgeführt und gelangt über das schräge Förderband 1 in die Waschkufe 7. Oberhalb des Förderbandes 1 befindet sich eine Sprüheinrichtung 16 mit Sprühdüsen 17, aus denen Waschflüssigkeit mit einer Temperatur zwischen 60 und 80 °C auf den Folienschlauch 2 gesprüht wird, der über das Förderband 1 transportiert wird.

## Beschreibung

Die Erfindung betrifft ein Verfahren und eine Vorrichtung zum Entfernen von im Inneren eines Folienschlauches, hergestellt nach dem N-Methyl-morpholin-N-oxid(NMMO)-Verfahren, sich ansammelnden NMMO-Wasser-Gemisches.

Bei dem Folienschlauch kann es sich um einen nicht essbaren oder essbaren Folienschlauch handeln, der jeweils als Wursthülle bei der Herstellung klein- oder mittelkalibriger Wurstprodukte eingesetzt wird. In dem Patent DE 197 37 113 ist die Herstellung cellulosischer Folienschläuche durch Extrudieren und Regenerieren einer Lösung von Cellulose in NMMO beschrieben.

Des Weiteren ist in der nicht vorveröffentlichten deutschen Anmeldung DE 101 29 539 beschrieben, dass sich nach dem NMMO-Verfahren essbare Folienschläuche herstellen lassen, die außer Cellulose noch mindestens ein gelöstes Protein sowie zumindest einen Füllstoff enthalten, der in der NMMO-Lösung suspendiert ist.

Gemäß dem Patent DE 197 37 113 wird die Spinnlösung durch eine Ringschlitzdüse zu einem Folienschlauch extrudiert, der dann senkrecht nach unten in ein Spinnbad innerhalb einer Spinnkufe geführt wird. Zur Vermeidung von Verklebungen der Innenseite des Folienschlauches wird ein Druck im Inneren des Folienschlauches aufrecht erhalten und eine wässrige NMMO-Lösung in den Folienschlauch eingebracht. Der Folienschlauch wird am Boden der Spinnkufe über eine Walze umgelenkt und nach oben abgezogen, wobei das Abziehen nach oben bevorzugt schräg erfolgt, jedoch auch senkrecht vorgenommen werden kann. Hierzu ist eine Abzugswalze vorhanden, über die der flachgelegte Folienschlauch läuft und horizontal in eine Waschstrecke eingeleitet wird, die aus mehreren Waschkufen besteht, durch die der Folienschlauch mäanderförmig hindurchgeführt und mittels Wasser von den noch anhaftenden NMMO-Resten gereinigt wird. Während des Reinigungsprozesses muss das sich im Inneren des Folienschlauches ansammelnde NMMO-Wasser-Gemisch entfernt werden. Dies geschieht bereits in der Spinnkufe durch Absaugen der im Inneren des Folienschlauches sich ansammelnden Flüssigkeit an der Innenbadoberfläche des von der Ringschlitzdüse senkrecht zu der Umlenkwalze absteigenden Folienschlauches. Aus der Wandung des Folienschlauches tritt das NMMO-Wasser-Gemisch in das Innere des Folienschlauches aus. Bei der herkömmlichen Verfahrensführung des Folienschlauches von der Spinnkufe zu der ersten Waschkufe kann nur die bis zur ersten Waschkufe freiwerdende Flüssigkeit entfernt werden. Die nach dem Passieren der Umlenkwalze am Ende der Spinnkufe im Schlauchinneren freiwerdende Flüssigkeit sammelt sich an und muss durch periodisches Öffnen des Folienschlauches entfernt werden, was üblicherweise durch Aufschneiden des Folienschlauches geschieht. Vor und nach dem Einschneiden des Folienschlauches treten dabei Veränderungen des Schlauchdurchmessers auf, wodurch die Herstellung möglichst langer Folienschlauchstücke mit konstantem Kaliber nicht erreicht wird.

Aufgabe der Erfindung ist es, ein Verfahren der eingangs beschriebenen Art so zu verbessern, dass die im Inneren eines Folienschlauches angesammelte Flüssigkeit vor dem Eintritt des Folienschlauches in eine Waschstrecke kontinuierlich abgezogen werden kann.

Diese Aufgabe wird verfahrensgemäß in der Weise gelöst, dass der Folienschlauch nach dem Austritt aus einer Spinnkufe über eine Strecke schräg nach oben zu einer Waschkufe geführt wird und dass im Schlauchinneren befindliches NMMO-Wasser-Gemisch über die schräge Strecke in einen in der Spinnkufe senkrecht absteigenden Teil des Folienschlauches zurückfließt und von dort abgesaugt wird. Dadurch, dass der Folienschlauch nach dem Austritt aus der Spinnkufe eine längere Strecke in offener Form und stetig ansteigend geführt wird, kann die aus den Wandungen des Folienschlauches austretende Flüssigkeit in Gestalt des NMMO-Wasser-Gemisches im Schlauchinneren zur Spinnkufe zurückfließen. In der Spinnkufe kommunizieren die Flüssigkeitssäulen im ab- und aufsteigenden Schlauchteil, so dass die Flüssigkeit über die zuvor beschriebene Innenbadabsaugung im absteigenden Schlauchteil entfernt werden kann.

In Ausgestaltung des Verfahrens wird zum Kompaktieren der Folienschlauchwandung und zum beschleunigten Entquellen des Folienschlauches von dem NMMO-Wasser-Gemisch der Folienschlauch mit heißer Waschflüssigkeit von 60 bis 80 °C behandelt. Zweckmäßigerweise wird die Behandlung mit heißer Waschflüssigkeit entlang der Strecke vorgenommen, und dies geschieht in der Weise, dass der Folienschlauch entlang der Strecke mit der heißen Waschflüssigkeit besprüht wird. Vorteilhafterweise ist die Waschflüssigkeit Wasser.

In Ausgestaltung des Verfahrens wird der Folienschlauch über die Strecke unter einem Winkel von 10 bis 60° zur Horizontalen von der Spinnkufe stetig nach oben zu der Waschkufe geführt.

Bei einer weiteren Ausgestaltung des Verfahrens wird der Folienschlauch über eine mäanderförmige Strecke von der Spinn- zur Waschkufe geführt. Zweckmäßigerweise wird die Schräge der Strecke variabel einstellbar gewählt.

An und für sich wäre das Absaugen des NMMO-Wasser-Gemisches aus dem Inneren des Folienschlauches am einfachsten zu bewerkstelligen, wenn der Folienschlauch beliebig lange senkrecht nach oben bewegt werden könnte. Dies ist jedoch vorwiegend aus zwei Gründen nicht möglich, da erstens bei höherer Geschwindigkeit des Folienschlauches Innenflüssigkeit mit nach oben gerissen und damit dem Absaugen entzogen würde und zweitens mit zunehmender Länge des Folienschlauches dieser unter seinem Eigengewicht und dem Gewicht der in der Schlauchwandung enthaltenen Flüssigkeit mechanisch zu stark beansprucht würde, was zu Verdehnungen bis hin zum Abriss führen könnte. Es ist daher vorteilhaft den Folienschlauch zunächst senkrecht ansteigend aus der Spinnkufe herauszuführen und anschließend schräg nach oben zu der ersten Waschkufe zu transportieren, um so das Gewicht des Folienschlauches abzufangen. Die Höhe des senkrechten Teils des Folienschlauches muss materialabhängig, bedingt durch die Zusammensetzung und das Flächengewicht des Folienschlauches so gewählt werden, dass das Gewicht des Folienschlauches keine nachteilige Wirkungen im Hinblick auf die Kaliberkonstanz und die mechanische Festigkeit des Folienschlauches hat. In der Praxis beträgt der Abstand zwischen der Umlenkung nahe dem Boden der Spinnkufe und der oberhalb der Spinnkufe befindlichen Abzugswalze 1 bis 5 m, insbesondere 2 bis 3 m. Die obere Abzugswalze ist zugleich Auflagewalze für das Förderband, auf dem der Folienschlauch abgelegt und schräg nach oben transportiert wird.

Bei dem Transport des Folienschlauches ist zu beachten, dass dieser in nassem Zustand mechanisch nur sehr gering belastbar ist. Die Einrichtungen, die den Folienschlauch durch die einzelnen Behandlungsstufen wie Spinnkufe, Waschkufe, Weichmacherkufe, Trocknung, Konditionierung bewegen, müssen daher besonders schonend arbeiten. Dazu ist es zweckmäßig, alle Förderbänder, Umlenkwalzen in den einzelnen Bädern, Abzugswalzen und dergleichen in feinsten Abstufungen getrennt regelbar auszuführen und den Transport zusätzlich beispielsweise durch Förderbänder zu unterstützen. Nach dem Austritt aus der Spinnkufe, d. h. nach dem Durchlaufen des Spinnbades, wird der Folienschlauch durch eine Waschstrecke, die mehrere Waschkufen umfasst, geführt, in denen die Reste von NMMO von der Oberfläche des Folienschlauches entfernt werden. Danach wird der Folienschlauch durch eine Weichmacherkufe geführt, die eine Lösung eines Plastifiziermittels, vorzugsweise Glycerin, enthält. Auf Grund der geringen Stabilität des nassen Folienschlauches kann die übliche Trocknung im aufgeblasenen Zustand nicht unmittelbar erfolgen. Erst wenn der Wassergehalt im nicht aufgeblasenen Folienschlauch reduziert ist, erhöht sich die Stabilität so weit, dass eine Endtrocknung durchgeführt werden kann. Der weitgehend entwässerte Folienschlauch wird hierzu mit Heißluft auf eine vorbestimmte Endfeuchte getrocknet. Dabei wird der Folienschlauch auf das vorgesehene Endkaliber aufgeblasen und mit Heißluft getrocknet. Durch die Trocknung in aufgeblasenem Zustand erfolgt eine Längs- und Querverstreckung, durch die wesentliche Eigenschaften wie Festigkeit und Kaliberkonstanz eingestellt werden. Nach der Trocknung wird der Folienschlauch auf eine Vorratsrolle aufgewickelt.

Der Anstiegswinkel entlang der schrägen Strecke wird abhängig von der Transportgeschwindigkeit des Folienschlauches so gewählt, dass das NMMO-Wasser-Gemisch im Schlauchinneren kontinuierlich in Richtung Spinnkufe abfließt.

Es zeigt sich, dass beim Besprühen des Folienschlauches von außen mit heißer Waschflüssigkeit ein beschleunigtes Austreten des NMMO-Wasser-Gemisches aus der Innenwandung des Folienschlauches auftritt. Die Temperatur der Flüssigkeit muss mindestens 60 °C, bei einem Höchstwert von bis zu 80 °C betragen. Bei Anwendung von kalter Waschflüssigkeit zeigt sich, dass die Förderband-Strecke eine erhebliche Länge aufweisen muss, um einen merklichen Effekt bei dem Entquellen der Innenwandung des Folienschlauches zu erzielen. Durch die Besprühung des Folienschlauches mit heißem Wasser tritt eine erhebliche Kompaktierung der Schlauchwandung auf, die zwangsläufig von der beschleunigten Abgabe des NMMO-Wasser-Gemisches aus der Wandung begleitet wird, zusammen mit einer Verfestigung der Schlauchwandung. Durch diese Verfahrensweise wird ein deutliche Verlängerung der Schneidezeiten erreicht, da bei der Reinigung in den nachfolgenden Waschkufen eine erheblich geringere Menge an NMMO-Wasser-Gemisch im Schlauchinneren entsteht als bei einem Verfahren, bei dem ein Besprühen des Folienschlauches mit einer heißen Waschflüssigkeit nicht vorgenommen wird. Die schnittfreie Schlauchlänge kann um mindestens den Faktor 4 gegenüber dem bekannten Verfahren vergrößert werden, bei dem der Folienschlauch nach dem Austritt aus der Spinnkufe über eine Abzugswalze im wesentlichen horizontal in die Waschstrecke transportiert wird. Für die Abgabe des NMMO-Wasser-Gemisches aus der Schlauchwandung ist die erhöhte Temperatur der Waschflüssigkeit maßgebend und weniger die Menge der Waschflüssigkeit und auch nicht das Konzentrationsgefälle der NMMO-Lösung im Inneren des Folienschlauches zwischen Spinnkufe und erster Waschkufe. Bei höheren Transportgeschwindigkeiten des Folienschlauches wird das im Schlauchinneren sich ansammelnde NMMO-Wasser-Gemisch auch bei einem steileren Anstieg des Förderbandes von der Spinnkufe zur Waschkufe nicht ausreichend schnell zurückfließen. Es ist dann erforderlich, dass das in der Schlauchwandung und im Schlauchinneren befindliche NMMO-Wasser-Gemisch entlang der schrägen Strecke abgequetscht wird. In einer Variante des Abquetschens mit umlaufenden Abquetschwalzen wird das in der Schlauchwandung und im Schlauchinneren befindliche NMMO-Wasser-Gemisch mit variabler Geschwindigkeit gegen die Laufrichtung des Folienschlauches abgequetscht. Zweckmäßigerweise wird das NMMO-Wasser-Gemisch entlang der gesamten Strecke an mehreren Stellen oder nur am höher gelegenen Ende der Strecke abgequetscht. Durch die variabel einstellbare Geschwindigkeit, mit welcher der Folienschlauch abgequetscht wird, wird der Abtransport des NMMO-Wasser-Gemisches in Richtung Spinnkufe geregelt. Der Quetscheffekt bei gleichzeitigem Besprühen mit heißer Waschflüssigkeit bewirkt eine Beschleunigung des Flüssigkeitsaustritts aus der Schlauchwandung des Folienschlauches.

Mit dem erfindungsgemäßen Verfahren werden die Nachteile des herkömmlichen Verfahrens überwunden, die darin bestehen, dass die Entquellung der Schlauchwandung nur allmählich eintritt, wodurch sich das Ansammeln des NMMO-Wasser-Gemisches im Inneren des Folienschlauches über die Waschkufen der Waschstrecke verteilt. In der einzelnen Waschkufe wird der Folienschlauch bekannterweise mäanderförmig von oberen Umlenkwalzen zu unteren Umlenkwalzen geführt. Dabei bilden sich an den unteren Umlenkwalzen Flüssigkeitssäcke aus, die den glatten Lauf des Folienschlauches durch die Waschstrecke behindern und in unerwünschter Weise zu Kaliberschwankungen führen. Da die sich ansammelnde Flüssigkeit in den Flüssigkeitssäcken nicht mehr in Richtung zur Spinnkufe zurückgeführt werden kann, muss, wie schon zuvor erwähnt wurde, in regelmäßigen Abständen der Folienschlauch aufgeschnitten werden, um die Flüssigkeitssäcke zu entfernen. Dies führt bei dem herkömmlichen Verfahren zu kurzen Schlauchstücken und damit zu hohen Ausschussquoten wie zu einem erheblich höheren Arbeitsaufwand. Bei dem erfindungsgemäßen Verfahren treten die störenden Flüssigkeitssäcke nicht oder nur in wesentlich größeren Abständen auf, wodurch die Kaliberkonstanz für sehr lange Schlauchstücke gegeben ist und darüber hinaus die Fertigungskosten reduziert werden.

Im Rahmen der vorliegenden Aufgabe wird auch eine Vorrichtung zum Entfernen von im Inneren eines Folienschlauches, hergestellt nach dem N-Methyl-morpholin-N-oxid(NMMO)-Verfahren, sich ansammelnden NMMO-Wasser-Gemisches geschaffen, die sich dadurch auszeichnet, dass mindestens ein über zwei Rollen endlos umlaufendes Förderband zwischen einer Spinnkufe und einer Waschkufe angeordnet ist und schräg nach oben zu der Waschkufe ausgerichtet ist und dass der Folienschlauch, der im Inneren der Spinnkufe senkrecht nach unten und nach seiner Umlenkung senkrecht nach oben läuft, über das schräge Förderband zu der Waschkufe geführt ist.

In weiterer Ausgestaltung der Erfindung sind mehrere Förderbänder zwischen der Spinnkufe und der Waschkufe angeordnet, läuft jedes Förderband über zwei Rollen endlos um und sind die Förderbänder zick-zack-förmig übereinander ausgerichtet. Zweckmäßigerweise ist bei dieser Ausführungsform zwischen je zwei Förderbändern eine Umlenkrolle vorhanden und ist der Folienschlauch von der Spinnkufe aus mäanderförmig über die Obertrums der Förderbänder und die Umlenkrollen zu der Waschkufe geführt.

Die weitere Ausgestaltung der erfindungsgemäßen Vorrichtung ergibt sich aus den Merkmalen der Patentansprüche 15 bis 22.

Die Erfindung wird im Folgenden an Hand von zeichnerisch dargestellten Ausführungsbeispielen näher erläutert. Es zeigen:
- Figur 1: schematisch eine erste Ausführungsform der erfindungsgemäßen Vorrichtung nach der Erfindung, mit einem Förderband zwischen Spinn- und erster Waschkufe und einer Sprüheinrichtung,
- Figur 2: eine zweite Ausführungsform der erfindungsgemäßen Vorrichtung mit mehreren zick-zack-förmig übereinander angeordneten Förderbändern zwischen Spinn- und erster Waschkufe und einer Sprüheinrichtung,
- Figur 3: eine dritte Ausführungsform der Vorrichtung nach der Erfindung, mit einem Förderband zwischen Spinn- und erster Waschkufe und einem Quetschwalzenpaar,
- Figur 4: eine vierte Ausführungsform der erfindungsgemäßen Vorrichtung in Seitenansicht, mit einem Förderband zwischen Spinn- und erster Waschkufe und mit an dem Folienschlauch anliegenden Quetschwalzen, die zwischen zwei umlaufenden Ketten angeordnet sind.
- Figur 5: eine Draufsicht auf die Ausführungsform gemäß Fig. 4, und
- Figur 6: eine Draufsicht auf einen Ausschnitt eines Förderbandes.

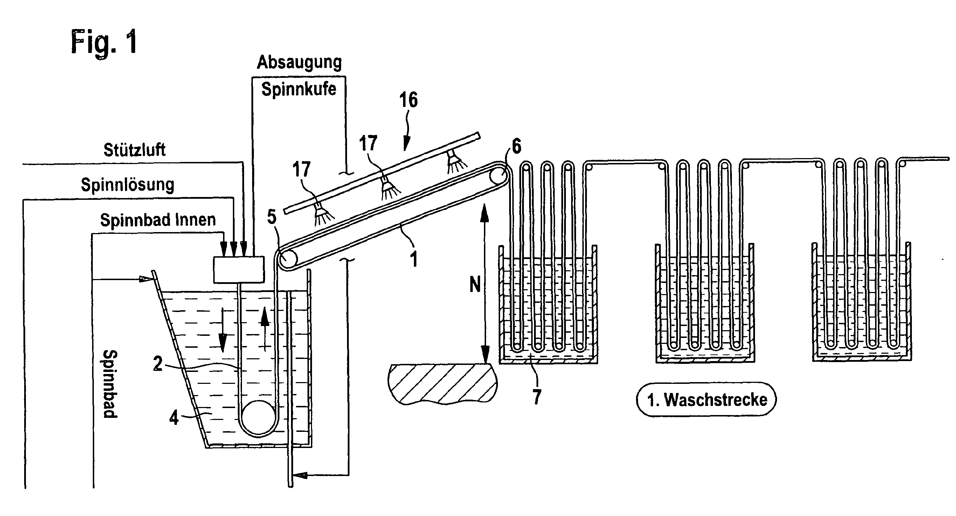

Die Vorrichtung nach Fig. 1 umfasst eine Spinnkufe 4, ein Förderband 1 und eine erste Waschstrecke mit einer ersten Waschkufe 7. Das Förderband 1 läuft endlos über zwei Rollen 5 und 6 um und ist schräg nach oben von der Spinnkufe zu der Waschkufe 7 angeordnet. Ein Folienschlauch 2, der im Inneren der Spinnkufe 4 senkrecht nach unten und nach seiner Umlenkung senkrecht nach oben geführt ist, wird über das schräge Förderband 1 zu der Waschkufe 7 transportiert, in der sich reines Wasser befindet. Der nach dem NMMO-Verfahren hergestellte Folienschlauch 2 wird durch eine Ringdüse in das Spinnbad der Spinnkufe 4 extrudiert. Das im Schlauchinneren befindliche NMMO-Wasser-Gemisch fließt auf Grund der Schräge des Förderbandes 1 unter Einfluss der Gravitation in den senkrecht aufsteigenden Teil des Folienschlauches 2 innerhalb der Spinnkufe 4 zurück und gelangt auf Grund der kommunizierenden Flüssigkeitssäulen im auf- und absteigenden Teil des Folienschlauches 2 in den absteigenden Teil und wird von dort aus dem Inneren des Folienschlauches 2 abgesaugt. Der schräge Winkel bzw. der Anstiegswinkel des Förderbandes ist, abhängig von der Laufgeschwindigkeit des Folienschlauches 2, so zu wählen, dass das NMMO-Wasser-Gemisch im Schlauchinneren kontinuierlich zur Spinnkufe abfließt. Oberhalb des Förderbandes 1 befindet sich eine Sprüheinrichtung 16 mit Sprühdüsen 17, aus denen Waschflüssigkeit auf den Folienschlauch 2 gesprüht wird. Diese Waschflüssigkeit ist im Bereich von 60 bis 80 °C temperiert. Durch die Berieselung des Folienschlauches 2 mit der heißen Waschflüssigkeit, bei der es sich in erster Linie um heißes Wasser handelt, wird eine beschleunigte Abgabe von NMMO-Wasser-Gemisch aus der Schlauchwandung in das Schlauchinnere erzielt, d. h. die sogenannte Entquellung der Schlauchwandung und damit einhergehend ein Schrumpf, der zu einer erheblichen Kompaktierung der Schlauchwandung führt, erhalten. Die Flüssigkeitstemperatur muss mindestens 60 °C betragen, um einen merklichen Effekt zu erzielen. Bei Anwendung von kalter Waschflüssigkeit, d. h. bei einer Temperatur unter 60 °C zeigt sich, dass das Förderband 1 eine erhebliche Länge aufweisen müsste, um einen vergleichbaren Effekt wie mit heißer Waschflüssigkeit zu erzielen.

Das Förderband 1 und die Sprüheinrichtung 16 bilden eine Einheit, die um einen unteren Schwenkpunkt vertikal auf- und abschwenkbar ist, wie dies durch den Doppelpfeil N in Fig. 1 angedeutet ist. Auf diese Weise kann die Schräge des Förderbandes 1 zwischen 10 und 60° gegenüber der Horizontalen eingestellt werden.

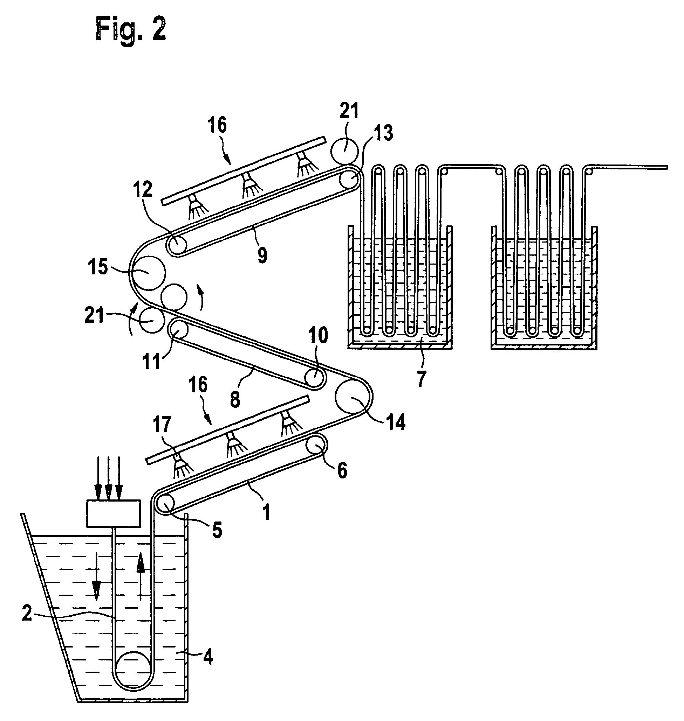

In Fig. 2 ist eine gegenüber der in Fig. 1 gezeigten ersten Ausführungsform abgewandelte zweite Ausführungsform der Vorrichtung dargestellt. Zwischen der Spinnkufe 4 und der ersten Waschkufe 7 befindet sich eine Förderstrecke, die aus zick-zack-förmig übereinander angeordneten Förderbändern 1, 8, 9 besteht. Zwischen den Förderbändern 1 und 8 befindet sich eine Umlenkrolle 14 für den Folienschlauch 2 und zwischen dem oberen Ende des Förderbandes 8 und dem unteren Ende des Förderbandes 9 befindet sich gleichfalls eine Umlenkrolle 15. Der Folienschlauch wird mäanderförmig über die Obertrums der Förderbänder 1, 8, 9 und die Umlenkrollen 14, 15 in die Waschkufe 7 geführt. Parallel zu und oberhalb des unteren Förderbandes 1 befindet sich gleichfalls eine Sprüheinrichtung 16 mit einer Anzahl von Sprühdüsen 17. Aus Gründen der besseren Übersichtlichkeit ist es nicht dargestellt, dass auch oberhalb des mittleren Förderbandes 8 oder des obersten Förderbandes 9 je eine Sprüheinrichtung 16 mit einer Anzahl von Sprühdüsen 17 angebracht sein kann.

Eine schräg nach oben gerichtete Anordnung des Förderbandes 1 und gleichzeitiges Abquetschen des Förderbandes ist immer dann erforderlich, wenn der Folienschlauch 2 mit höherer Geschwindigkeit als 35 m/min transportiert wird. Da der Neigungswinkel bzw. schräge Winkel des Förderbandes zwischen 10 bis 60° zu der Horizontalen beträgt, kann bei höheren Transportgeschwindigkeiten des Folienschlauches 2 der vollständige mengenmäßige Rücklauf des im Schlauchinneren entstehenden NMMO-Wasser-Gemisches nicht mehr erreicht werden, da durch die hohen Transportgeschwindigkeiten zu viel NMMO-Wasser-Gemisch mit dem Folienschlauch mitgerissen wird. Die Schwerkraft allein reicht dann nicht mehr aus, genügend NMMO-Wasser-Gemisch über die Schräge des Förderbandes 1 zurückzuführen. Eine umfassende Rückführung wird dann dadurch erreicht, dass ein Abquetschen des NMMO-Wasser-Gemisches innerhalb des Folienschlauchs 2 in Richtung der Spinnkufe 4 erfolgt.

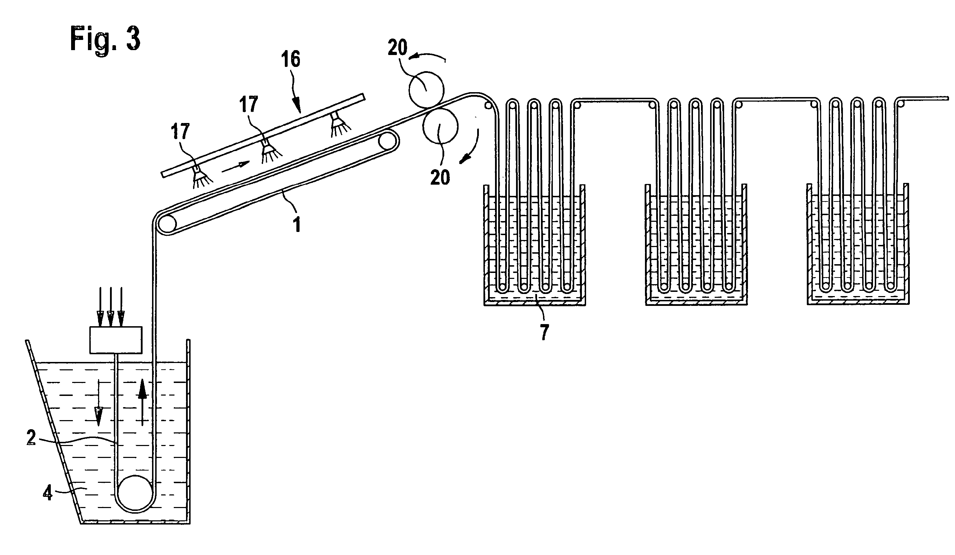

In Fig. 3 ist eine dritte Ausführungsform der Vorrichtung nach der Erfindung gezeigt. Diese Ausführungsform ist ähnlich der Ausführungsform nach Fig. 1 aufgebaut, und enthält zusätzlich zu der ersten Ausführungsform nahe dem oberen Ende des Förderbandes 1 noch ein Quetschwalzenpaar 20, 20. Der Drehsinn des Quetschwalzenpaars 20, 20 ist gleichlaufend zu der Transportrichtung des Folienschlauches 2, der über das schräg nach oben gerichtete Förderband 1 aus der Spinnkufe 4 in die erste Waschkufe 7 bewegt wird. Oberhalb des Förderbandes 1 ist die Sprüheinrichtung 16 mit den Sprühdüsen 17 angeordnet. Die Umlaufgeschwindigkeit des Quetschwalzenpaares 20, 20 ist variabel einstellbar, um so das in der Schlauchwandung und im Schlauchinneren befindliche NMMO-Wasser-Gemisch mit der gleichen Geschwindigkeit wie das Förderband 1 in Laufrichtung des Folienschlauches 2 abquetschen zu können. Der Quetscheffekt mit gleichzeitigem Besprühen mit heißer Flüssigkeit beschleunigt den Flüssigkeitsaustausch bzw. das Entquellen der Schlauchwandung des Folienschlauches 2 in erheblichem Maße. Durch diese Prozessführung wird eine deutliche Verlängerung der Schneidezeiten des Folienschlauches 2 zum Entfernen der sich an den unteren Umlenkungen des Folienschlauches in den Waschkufen ausbildenden Flüssigkeitssäcke erreicht. In den nachfolgenden Waschkufen der Waschstrecke entsteht eine wesentlich geringere Menge an NMMO-Wasser-Gemisch im Schlauchinneren als bei einem herkömmlichen Verfahren, bei dem der Folienschlauch nach dem Austritt aus der Spinnkufe 4 über eine Umlenkwalze horizontal der Waschkufe 7 zugeleitet wird, ohne Besprühen des Folienschlauches 2 auf seinem Weg von der Spinnkufe 4 zu der Waschkufe 7 mit heißer Waschflüssigkeit.

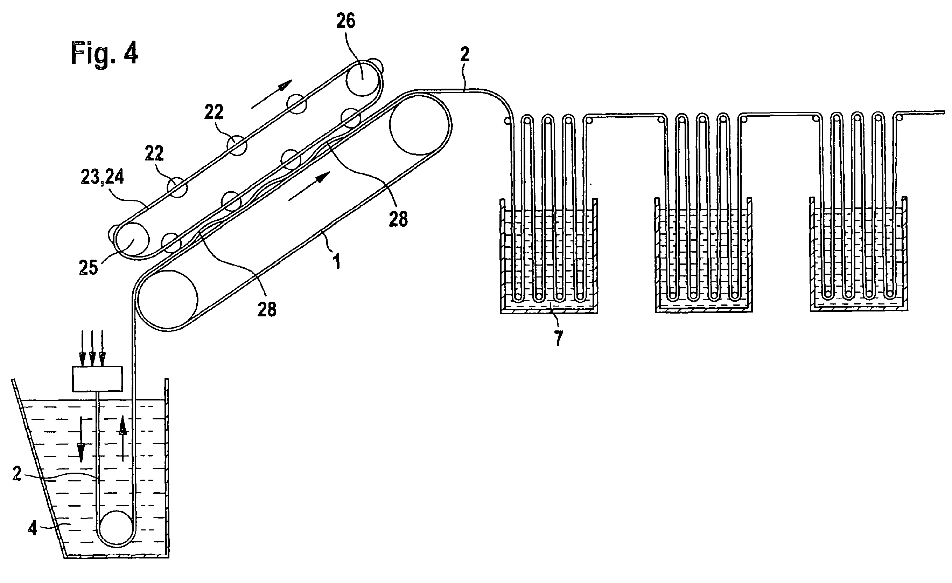

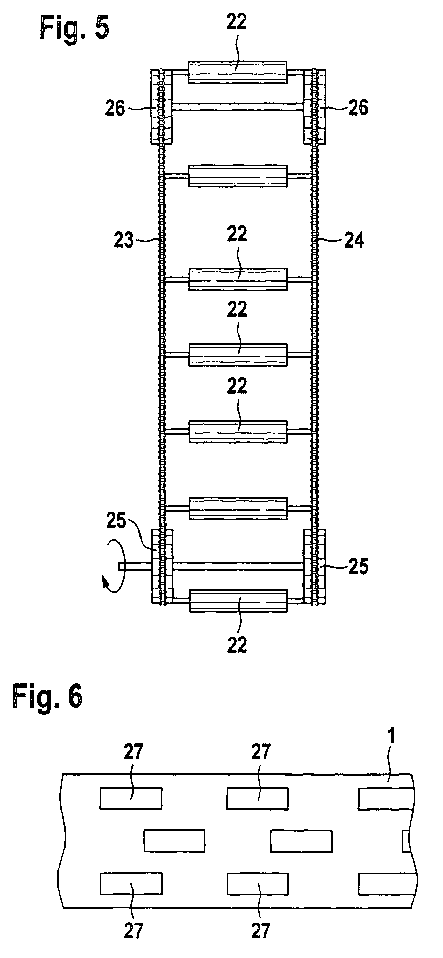

In den Figuren 4 und 5 ist eine vierte Ausführungsform der Erfindung dargestellt, bei der Quetschwalzen 22 über die Oberfläche des über das Transportband 1 bewegten Folienschlauches 2 geführt sind. Jede dieser Quetschwalzen 22 ist mit ihrer Achse in zwei umlaufenden Ketten 23, 24 drehbar gelagert, wie aus Fig. 5 ersichtlich ist. Die umlaufenden Ketten 23, 24 bewegen die Quetschwalzen 22 gegen die Laufrichtung des Folienschlauches 2. Die auf der Oberfläche des Folienschlauches 2 bewegten Quetschwalzen 22 bewirken eine nach dem Prinzip der Schlauchpumpe wirkende Förderung des NMMO-Wasser-Gemisches im Inneren des Folienschlauches 2 zurück in Richtung Spinnkufe 4. Dabei bilden sich im Inneren des Folienschlauches 2 zwischen zwei Quetschwalzen jeweils Flüssigkeitssäcke 28 aus, die gegenläufig zu der Transportrichtung des Folienschlauches 2 in Richtung Spinnkufe 4 gefördert werden. Wie Fig. 5 zeigt, laufen die beiden Ketten 23, 24 um Kettenräderpaare 25, 26 um, von denen ein Kettenräderpaar 25 angetrieben ist.

Die Ausführungsformen gemäß den Figuren 3, 4 und 5 kommen stets dann zum Einsatz, wenn die Transportgeschwindigkeit des Folienschlauches 2 größer als 35 m/min, insbesondere 40 bis 50 m/min beträgt.

In Fig. 6 ist eine Draufsicht auf einen Ausschnitt eines Förderbandes 1 gezeigt, das Durchbrüche 27 enthält. In gleicher Weise sind auch die Förderbänder 8 und 9 mit Durchbrüchen ausgestattet. Die Durchbrüche sind in ihren Abmessungen so gestaltet, dass keine Verprägungen des Folienschlauchs auftreten. Dadurch wird das Gewicht der Förderbänder verringert und darüber hinaus der Folienschlauch 2 mechanisch nur so weit belastet, wie dies im Hinblick auf die gelartige Struktur des Folienschlauches 2 möglich ist. Es können aber auch Förderbänder ohne derartige Durchbrüche, d.h. Förderbänder mit geschlossener Oberfläche eingesetzt werden.

### Beispiel

Eine essbarer Folienschlauch 2 mit dem Kaliber 22 mm wird nach dem NMMO-Verfahren hergestellt. Der Feststoffanteil des Folienschlauches beträgt 40 % Cellulose, 10 % Zein und 50 % gemahlene Weizenstärke. Der Flüssigkeitsanteil am Gesamtvolumen der Schlauchwand nach dem Austritt des Folienschlauches 2 aus dem Spinnbad 4 beträgt 71 %. Der Folienschlauch 2 wird mittels der ersten Ausführungsform gemäß Fig. 1 von der Spinnkufe 4 zu der ersten Waschkufe 7 transportiert. Nach dem Besprühen mit heißem Wasser von 70 °C und dem Passieren des schrägen Förderbandes 1 wird der Flüssigkeitsanteil gemessen, er beträgt 39 Gew.-%. Der gleiche Flüssigkeitsanteil wird am Ende der Nassbehandlung, d. h. nach dem Durchlaufen der gesamten Waschstrecke, die bis zu vier oder fünf Waschkufen enthält, gemessen. Daraus lässt sich der Schluss ziehen, dass während des gesamten Waschvorganges ein Austausch von Flüssigkeit zwischen der Schlauchwandung und der Waschumgebung stattfindet, jedoch das Gesamtvolumen der Schlauchwandung im Wesentlichen unverändert bleibt. Dadurch werden nur noch sehr geringe Ansammlungen von NMMO-Wasser-Gemisch im Inneren des Folienschlauches 2 auftreten, so dass es zu einer erheblichen Verlängerung der Schneide-intervalle für den Folienschlauch 2 zum Entfernen der Flüssigkeitsansammlungen kommt. Die schnittfreie Schlauchlänge wird um mindestens den Faktor 4 gegenüber dem herkömmlichen Verfahren, bei dem weder ein schräger Transport des Folienschlauches von Spinnkufe zu Waschkufe stattfindet noch ein Besprühen mit heißer Waschflüssigkeit vorgenommen wird, vergrößert.

## Patentansprüche

1. Verfahren zum Entfernen von im Inneren eines Folienschlauches, hergestellt nach dem N-Methyl-morpholin-N-oxid(NMMO)-Verfahren, sich ansammelnden NMMO-Wasser-Gemisches, **dadurch gekennzeichnet, dass** der Folienschlauch nach dem Austritt aus einer Spinnkufe über eine Strecke schräg nach oben zu einer Waschkufe geführt wird und dass im Schlauchinneren befindliches NMMO-Wasser-Gemisch über die schräge Strecke in einen in der Spinnkufe senkrecht absteigenden Teil des Folienschlauches zurückfließt und von dort abgesaugt wird.

2. Verfahren nach Anspruch 1, **dadurch gekennzeichnet, dass** zum Kompaktieren der Folienschlauchwandung und zum beschleunigten Entquellen des Folienschlauches von dem NMMO-Wasser-Gemisch der Folienschlauch mit heißer Waschflüssigkeit von 60 bis 80 °C behandelt wird.

3. Verfahren nach Anspruch 2, **dadurch gekennzeichnet, dass** die Behandlung mit heißer Waschflüssigkeit entlang der schrägen Strecke vorgenommen wird.

4. Verfahren nach Anspruch 3, **dadurch gekennzeichnet, dass** der Folienschlauch entlang der schrägen Strecke mit der heißen Waschflüssigkeit besprüht wird.

5. Verfahren nach Anspruch 2, **dadurch gekennzeichnet, dass** die Waschflüssigkeit Wasser ist.

6. Verfahren nach Anspruch 1, **dadurch gekennzeichnet, dass** der Folienschlauch über die schräge Strecke unter einem Winkel von 10 bis 60° zur Horizontalen von der Spinnkufe stetig nach oben zu der Waschkufe geführt wird.

7. Verfahren nach Anspruch 1, **dadurch gekennzeichnet, dass** der Folienschlauch über eine ansteigende mäanderförmige Strecke von der Spinn- zur Waschkufe geführt wird.

8. Verfahren nach Anspruch 1, **dadurch gekennzeichnet, dass** die Schräge der Strecke variabel einstellbar gewählt wird.

9. Verfahren nach Anspruch 1, **dadurch gekennzeichnet, dass** das in der Schlauchwandung und im Schlauchinneren befindliche NMMO-Wasser-Gemisch entlang der schrägen Strecke abgequetscht wird.

10. Verfahren nach Anspruch 9, **dadurch gekennzeichnet, dass** das in der Schlauchwandung und im Schlauchinneren befindliche NMMO-Wasser-Gemisch mit der gleichen Geschwindigkeit mit der das Förderband sich bewegt, in Laufrichtung des Folienschlauches abgequetscht wird.

11. Verfahren nach Anspruch 9 oder 10, **dadurch gekennzeichnet, dass** das NMMO-Wasser-Gemisch entlang der gesamten Strecke an mehreren Stellen oder nur am höher gelegenen Ende der Strecke abgequetscht wird.

12. Vorrichtung zum Entfernen von im Inneren eines Folienschlauches (2), hergestellt nach dem N-Methyl-morpholin-N-oxid(NMMO)-Verfahren, sich ansammelnden NMMO-Wasser-Gemisches, **dadurch gekennzeichnet, dass** mindestens ein über zwei Rollen (5,6) endlos umlaufendes Förderband (1) zwischen einer Spinnkufe (4) und einer Waschkufe (7) angeordnet ist und schräg nach oben zu der Waschkufe (7) ausgerichtet ist und dass der Folienschlauch (2), der im Inneren der Spinnkufe (4) senkrecht nach unten und nach seiner Umlenkung senkrecht nach oben läuft, über das schräge Förderband (1) zu der Waschkufe (7)geführt ist.

13. Vorrichtung nach Anspruch 12, **dadurch gekennzeichnet, dass** mehrere Förderbänder (1; 8; 9) zwischen der Spinnkufe (4) und der Waschkufe (7) angeordnet sind, dass jedes Förderband über zwei Rollen (5, 6; 10, 11; 12, 13) endlos umläuft und dass die Förderbänder zick-zack-förmig übereinander ausgerichtet sind.

14. Vorrichtung nach Anspruch 13, **dadurch gekennzeichnet, dass** zwischen je zwei Förderbändern (1, 8; 8, 9) eine Umlenkrolle (14; 15) vorhanden ist und dass der Folienschlauch (2) von der Spinnkufe (4) aus mäanderformig über die Obertrums der Förderbänder und die Umlenkrollen (14; 15) zu der Waschkufe (7) geführt ist.

15. Vorrichtung nach Anspruch 12, **dadurch gekennzeichnet, dass** oberhalb des Förderbandes (1) eine Sprüheinrichtung (16) mit einer Anzahl von Sprühdüsen (17) zum Besprühen des Folienschlauches (2) mit Waschflüssigkeit angeordnet ist.

16. Vorrichtung nach Anspruch 13, **dadurch gekennzeichnet, dass** oberhalb eines oder zweier oder aller Förderbänder je eine Sprüheinrichtung (16) mit einer Anzahl von Sprühdüsen (17) angebracht ist.

17. Vorrichtung nach Anspruch 12 oder 13, **dadurch gekennzeichnet, dass** ein Quetschwalzenpaar (20) nahe dem oberen Ende des Förderbandes (1) angeordnet ist, dass der Folienschlauch (2) zwischen dem Quetschwalzenpaar hindurchläuft und dass das Quetschwalzenpaar gegenläufig zu der Transportrichtung des Folienschlauches (2) umläuft.

18. Vorrichtung nach Anspruch 13, **dadurch gekennzeichnet, dass** ein Quetschwalzenpaar (21) nahe dem oberen Ende des mittleren oder des obersten Förderbandes (8; 9) angeordnet ist, dass der Folienschlauch (2) zwischen dem Quetschwalzenpaar (21) hindurchläuft und dass das Quetschwalzenpaar gegenläufig zu der Transportrichtung des Folienschlauches (2) umläuft.

19. Vorrichtung nach Anspruch 12 oder 13, **dadurch gekennzeichnet, dass** mehrere Quetschwalzen (22) auf der Oberfläche des über das Förderband (1) transportierten Folienschlauches (2) anliegen und dass die Quetschwalzen (22) mit ihren Achsen in zwei umlaufenden Ketten (23; 24) drehbar gelagert sind und gegen die Transportrichtung des Folienschlauches (2) mit variabel einstellbarer Geschwindigkeit umlaufen.

20. Vorrichtung nach Anspruch 12, **dadurch gekennzeichnet, dass** das Förderband (1) und die Sprüheinrichtung (16) vertikal in einer Weise verstellbar sind, dass ihr Neigungswinkel zur Horizontalen 10 bis 60° beträgt.

21. Vorrichtung nach einem der Ansprüche 12 bis 20, **dadurch gekennzeichnet, dass** die Umlaufgeschwindigkeit der Quetschwalzenpaare (20; 21) variierbar ist.

22. Vorrichtung nach einem der Ansprüche 12 bis 20, **dadurch gekennzeichnet, dass** die Förderbänder (1; 8; 9) mit Durchbrüchen (27) ausgestattet sind.
